# EUROPÄISCHE PATENTSCHRIFT

(11) **EP 1 329 057 B1**
(45) Veröffentlichungstag und Bekanntmachung des Hinweises auf die Patenterteilung: **10.05.2006**
(21) Anmeldenummer: 01980411.1
(22) Anmeldetag: 19.09.2001
(51) Int. Cl.: H04L 12/403, H04L 12/413

(54) **Verfahren für den Zugriff aauf einen Datenbus zwischen kommunizierenden elektronischen einheiten**
Method for accessing a data bus between communicating electronic units
Procédé permettant l'access a un bus de données entre des unites electronicques en communication

(30) Priorität: 20.09.2000 DE 10046607
(43) Veröffentlichungstag der Anmeldung: 23.07.2003
(73) Patentinhaber: Straub, Norbert, 69198 Schriesheim (DE)
(72) Erfinder: Straub, Norbert, 69198 Schriesheim (DE)
(74) Vertreter: Thews, Karl
(86) Internationale Anmeldenummer: PCT/EP2001/010836
(87) Internationale Veröffentlichungsnummer: WO 2002/030058

(56) Entgegenhaltungen:
- US-A- 5 740 174
- US-A- 5 754 799

## Beschreibung

Die Erfindung bezieht sich auf ein Verfahren zur Vereinbarung des Zugriffs von Knoten auf einen Bus zur Übertragung von Daten, wobei die die Busteilnehmer darstellenden Knoten alle mit dem Bus in Verbindung stehen und ein dem Bus übergeordneter Buscontroller vorgesehen ist, der zur Sicherstellung und Vergabe des Buszugriffes der Busteilnehmer bei gleichzeitigem Zugriff durch diese dient.

Aus WO 99/16200 ist eine Schnittstelle für einen Datenbus zum Austausch von Daten mit einem Speicher, der mehrere Eingänge umfaßt, bekannt geworden. Mittels des Speichers mit mehreren Eingängen wird simultaner Zugang über bidirektionale Datenbusse zu datenverarbeitenden Prozessoren ermöglicht. Beide Datenübertragungsbusleitungen und der Prozessor sind mit verschiedenen Eingängen des Speichers verbunden, wobei jeder unabhängig auf im Speicher mit drei Eingängen abgelegten Daten mit voller Datenübertragungsgeschwindigkeit zugreifen kann. Aufgrund der Verwendung eines Mehrfacheingangs am Speicher ist kein Kopieren oder Verschieben von Daten erforderlich, um Zugang zu den Daten oder Zugriff auf den Prozessor zu ermöglichen. Mit der Datenbusschnittstelle lassen sich besonders Ver- bzw. Entschlüsselungsprozeduren handhaben, ferner Protokollierung sowie PCI/SCI-Überbrückungen bei voller Datenübertragungsgeschwindigkeit an den Ein- bzw. Ausgängen ohne einen Prozessor zu belegen.

Aus US 5,130,981 ist ein RAM mit drei Eingängen bekannt geworden, welches innerhalb eines Netzwerkes eingebunden ist. Im Netzwerk ist ein Systemprozessor integriert, ein RAM, sowie ein erster Speicherzugriffscontroller, sowie ein zweiter Speicherzugriffscontroller, sowie eine Schnittstelle mit drei Eingängen zum RAM. Das RAM wird dazu benutzt Datenpakete zu speichern, die vom ersten und zweiten Netzwerk übertragen werden. Das Interface mit drei Eingängen zum RAM enthält einen ersten Eingang, der mit einem ersten Speichercontroller verbunden ist, sowie einen zweiten Eingang der mit dem zweiten Speichercontroller verbunden ist und schließlich einen dritten Eingang, der mit dem Systemprozessor in Verbindung steht. Das Interface mit drei Eingängen teilt dem ersten Speicherzugangscontroller sowie dem zweiten Speicherzugangscontroller und schließlich dem Systemprozessor Zugang zum RAM zu.

Der Zugang zum RAM wird so zugeteilt, so daß der erste Speicherzugangscontroller, der zweite Speicherzugangscontroller und der Systemprozessor alle gleiche Zugriffspriorität haben. Das Interface mit drei Eingängen ist in seiner Zyldusgeschwindigkeit ungefähr dreimal so schnell wie der Zugriffszyklus des Systemprozessors, des ersten Speicherzugangscontrollers und des zweiten Speicherzugangscontrollers. Das macht das Vorsehen lokaler Puffer zwischen den Speicherzugangscontrollern und dem Netzwerk überflüssig und gestattet vor allem dem Systemprozessor sowie den Speicherzugangscontrollem simultanen Zugriff auf das Interface mit drei Eingängen mit einem Minimum an Zugriffskollisionen.

Bei miteinander kommunizierenden elektronischen Einheiten ist es erforderlich, um die Kommunikation mehrerer Kommunikationsparte untereinander zu regeln, den Zugriff auf ein den Datenaustausch ermöglichendes Bussystem über ein Buszugriffsprotokoll zu regeln. Im Buszugriffsprotokoll sind die Bedingungen niedergelegt, zu denen der einzelne Busteilnehmer auf den Bus zugreifen kann, um über diesen seine Daten zu versenden. Bei einem aus dem Stand der Technik bekannten Verfahren wird gewartet, bis der Bus gerade nicht benutzt wird, danach ist der Zugriff erlaubt. Dieses Verfahren geht mit dem Nachteil einher, daß noch mehrere Busteilnehmer gleichzeitig mit dem Senden beginnen können, so daß Kollisionen auftreten können. Ein solches Verfahren nennt man CSMA/CD- oder CSMA/CA- Zugriffsverfahren (carrier sense, multiple access with collision detection oder collision avoidance).

Gemäß eines anderen aus dem Stand der Technik bekannten Verfahrens wird ein sogenanntes "token" zwischen den einzelnen Knoten herumgereicht, welches die Zugriffserlaubnis auf den Bus darstellt. Nur der Knoten, der augenblicklich das token besitzt, darf senden. Das Token ist demnach als ein momentanes Freizeichen anzusehen, welches von Kommunikationseinheit zu Kommunikationseinheit weitergereicht wird. Dies wird auch "token-passing" genannt. Beide Verfahren erlauben einen für alle Busteilnehmer gleichberechtigten Buszugriff im Gegensatz zu einem Dritten hier kurz skizzierten Verfahren, dem sogenannten "master-slave-Verfahren". Ein sogenannter "Busmaster" vergibt die Zugriffserlaubnis nach eigenem Ermessen, indem er den Busknoten, von dem er Daten erwartet, die Kontrolle, d.h. den Buszugriff zuweist. Dabei findet im allgemeinen lediglich eine Datenübertragung von und zum master statt, untereinander haben die Knoten keinen direkten Kontakt miteinander. Dieses master-slave-Verfahren kann man auch als Abrufverfahren "(polling)" bezeichnen.

Die auf einem den elektronischen Datenaustausch realisierenden Bus-definierten elektronischen Kommunikatiönsverfahren unterscheiden sich demnach in den nachfolgend skizzierten Hauptkriterien anhand deren sich die jeweilige Einsetzbarkeit näher definieren läßt. Es sind zu berücksichtigen Buszugriffsgeschwindigkeit, ferner der Ressourcenverbrauch, d.h. wieviel Aufwand der einzelnen Kommunikationsteilnehmer leisten muß, um den Buszugriff und die fehlerfreie Übertragung seiner Daten gewährleistet zu wissen. Schließlich ist die Kommunikationstopologie von Interesse, aus der hervorgeht, ob alle Busteilnehmer gleichberechtigt sind und beliebig miteinander Daten austauschen können, oder ob es eine Bushierarchie gibt, die den Datenaustausch zwischen den einzelnen Busteilnehmern einschränkt.

Das master-slave-Verfahren einerseits läßt eine Kommunikation der einzelnen Knoten lediglich mit dem master zu, nachdem durch diesen eine Aufforderung ergangen sein muß; das token-passing und die angesprochenen Kollisionsverfahren CSMA/CD oder CSMA/CA erlauben ein In-Verbindung-Treten von jedem mit jedem.

Im Hinblick auf die Buszugriffsgeschwindigkeit sind das master-slave-Verfahren und das token-passing von den Kollisionsverfahren zu unterscheiden, mit denen eine spontanere Reaktion möglich ist. Der Normalfall bei elektronischen Datenübertragungssystemen ist der freie Bus. Ein Kommunikationsteilnehmer in Gestalt einer elektronischen Baueinheit kann daher bei den Kollisionsverfahren unmittelbar nachdem der Anlaß zu kommunizieren aufkommt, die Kommunikation in der Regel auch durchführen. Bei den beiden anderen angesprochenen Verfahren muß er zunächst warten, bis ihm der Bus-Zugriff in Form des Freizeichens (Token) zugeteilt wird. Dies kann den in Einzelfällen extrem gravierenden Nachteil nach sich ziehen, daß es zu einer nicht mehr akzeptablen Verzögerung in der Datenweitergabe kommt Im Hinblick auf die erforderliche Ressourcenbeanspruchung liegen die Vorteile andersherum. Den Kommunikationsträger daraufhin abzuprüfen, ob er gerade benutzt wird oder nicht (carrier sense) ist nicht trivial, da dieser Vorgang mit Zeitmessungen verbunden ist, die eine entsprechende Zeitmessfunktion voraussetzen. Dafür sind "interrupts" vonnöten, die wiederum begrenzt verfügbare Hardwarefunktionen darstellen. Im Falle einer Kollision ist ein ähnlicher Aufwand notwendig, um diese immer sicher auflösen oder vermeiden zu können. Die beiden anderen Verfahren (token-, master-slave-Verfahren) benötigen diesen Aufwand der Interruptverarbeitung in Gestalt von begrenzt verfügbaren Hardwarefunktionen nicht und sind hinsichtlich des Ressourcenverbrauchs erheblich günstiger.

In der US 5,740,174 wird ein Feld-Bus-System wie ein Ethernet-Bus-System beschrieben. Dabei sind verschiedene repeater-Einheiten vorgesehen, die über Sender-Empfänger-Einheiten mit einem externen Bus-Master verbunden sind. Die repeater-Einheiten sind untereinander über einzelne Datenbusse verbunden. Jede repeater-Einheit besitzt eine activity-line, die mit jeder der anderen repeater-Einheiten verbunden ist und für die Signalisierung des Status der jeweiligen repeater-Einheit dient.

Aus der D 1 (US 5,754,799) ist ein Verfahren zur Vereinbarung des Zugriffs von Teilnehmern (slaves) auf ein Bussystem zur Übertragung von Daten bekannt, wobei die Teilnehmer alle über den aus einem ersten unidirektioinalen Manager-Bus und einem zweiten unidirektioinalen Teilnehmer-Bus bestehenden Bussystem in Verbindung stehen. In dem so gebildeten Bussystem ist ein übergeordneter Manager (master) zur Verwaltung des Buszugriffs vorgesehen. Die Kommunikation zwischen Teilnehmern und dem Manager findet separiert auf dem Manager-Bus bzw. dem Teilnehmer-Bus statt. Die Kommunikation der Teilnehmer betreffend den Antrag sowie die Vergabe der Zugriffsberechtigung erfolgt ausschließlich mit dem Manager. Dabei leitet ein sendebereiter Teilnehmer seinen Zugriff auf den Teilnehmer-Bus durch Generierung eines Antrages an den Manager auf dem Manager-Bus ein. Der Manager erlaubt aufgrund des Antrages einem Teilnehmer den Zugriff auf den Teilnehmer-Bus und übermittelt den anderen Teilnehmern den Buszustand "belegt" auf dem Teilnehmer-Bus.

Angesichts der oben skizzierten Lösungen des Standes der Technik sowie angesichts der Nachteile der gängigen Buszugriffsverfahren liegt der Erfindung die Aufgabe zugrunde, ein Buszugriffsverfahren bereitzustellen, welches ohne Vorgabe einer Hierarchie auskommt, aber gleichzeitig für eine master-slave-Topologie offen ist.

Erfindungsgemäß wird diese Aufgabe dadurch gelöst, dass ein aus einem einzelnen bidirektionalen Feldbus gebildeter Bus vorgesehen wird und ein sendebereiter Busteilnehmer den Zugriff auf den Bus durch Generierung eines individuellen Freizeichens auf dem Bus allen anderen Busteilnehmern und dem Buscontroller anzeigt, wobei die Generierung des individuellen Freizeichens eines sendebereiten Busteilnehmers unmittelbar bei allen anderen Teilnehmern den Buszustand "belegt" erzeugt.

Der dem bidirektional ausgestalteten Datenbus (Feldbus) übergeordnete Buscontroller erkennt gleichzeitigen Zugriff auf den Feldbus des Netzwerkes und löst die Zugriffskollision durch eine Buszuweisung auf. Im Falle einer Zugriffskollision braucht nunmehr kein sendebereiter Busknoten bzw. Busteilnehmer mit einem anderen sendebereiten Busknoten um den Buszugriff zu streiten, so daß der Aufwand, eine Kollision aufzulösen, von den einzelnen Busknoten eines Netzwerkes ferngehalten werden kann. Stattdessen wird dem sendebereiten Busknoten der Buszugriff vom Buscontroller zugewiesen oder der sendebereite Busknoten muß solange warten, bis er wieder die Nachricht "Bus frei" vom Buscontroller erhält. Je nach vereinbartem Zugriffsprotokoll auf den Datenbus kann dann ein neuerlicher Versuch gestartet werden, die Daten an dem jeweils zum Empfang bestimmten Busknoten zu übermitteln. Mit der erfindungsgemäß vorgeschlagenen Lösung wird sichergestellt, daß der einzelne Busteilnehmer bei Auftreten der Kollision von allem abläßt und keine weiteren Aktivitäten insbesondere keine eine Kollision auflösenden Aktivitäten mehr unternimmt. Das Einstellen aller weiteren Sendeaktivitäten durch einen sendebereiten Busknoten kann einerseits durch ein Ausbleiben des Quittierungssignals von dem Daten empfangenen Baustein generiert werden, andererseits kann durch eine Kontrollinformation des dem Feldbus übergeordneten Buscontrollers ein Signal an dem sendenden Baustein "Nachricht ungültig" übermittelt werden, woraufhin der sendebereite Busknoten alle Sendeaktivitäten einstellt. Die erfindungsgemäß vorgeschlagene Lösung geht mit dem Vorteil einher, daß an dem einzelnen Busknoten eines Feldbusses keinerlei Zeitmessfunktionen vorzuhalten sind, dadurch ist eine erhebliche Einsparung an Ressourcen gegeben; Zeitmessfunktionen und "interrupts" (Unterbrechungsfunktionen) in einem Mikroprozessor, die nur in beschränkter Anzahl zur Verfügung stehen, brauchen zur Auswertung eines Kollisionsereignisses auf dem Feldbus nunmehr nicht mehr beansprucht zu werden. Die Einsparung an Hardwareressourcen wie "timer" und "interrupts" stellt einen enormen Vorteil des erfindungsgemäß vorgeschlagenen Verfahrens im Vergleich zu den gängigen Kollisionsverfahren dar. Die gängigen Kollisionsverfahren erfordern in der Regel spezielle Bausteine oder eigens erweiterte Mikroprozessoren, die einen enormen Kostenfaktor darstellen. Mit dem erfindungsgemäß vorgeschlagenen Verfahren bedarf es dieser aufwendig zu modizfierenden Bausteine nicht, ferner ist das erfindungsgemäß vorgeschlagene Verfahren ein wesentliches ressourcenschonenderes Verfahren, da üblicherweise vorhandene serielle Schnittstellen zur Implementierung des erfindungsgemäß vorgeschlagenen Verfahrens völlig ausreichend sind.

Bei dem erfindungsgemäß beanspruchten Verfahren zeigt ein im Bussystem integrierter sendebereiter Busknoten den Zugriffswunsch auf das Bussystem durch Erzeugung eines individuellen Freizeichens an. Ein sendebereiter Busknoten der Daten auf dem Feldbus versenden will, wartet bis der Datenbus definitionsgemäß als "frei" gilt und legt danach sein eigenes seinen individuellen Übertragungswunsch äußernden individuelles Freizeichen auf den Bus und belegt diesen somit.

Die Erzeugung eines Freizeichens an einem sendebereiten Busknoten zieht unmittelbar den Buszustand "Bus belegt" nach sich. In diesem Moment ist der bidirektional arbeitende Datenbus belegt. D.h. andere sendebereiten Busknoten vermögen den Datentransfer des sendebereiten Busknotens nicht zu beeinträchtigen, dessen individuelles Freizeichen gerade den Feldbus belegt.

Nach Belegung des Feldbusses mit einem einen individuellen Busknoten kennzeichnenden individuellen Freizeichens erfolgt die Übertragung einer Nachricht auf dem Bussystem an einem empfangsbereiten Busknoten durch der Empfangsadresse nachgeordneten Bitfolgen.

Bei ausbleibendem Quittierungssignal des adressierten Busknotens signalisiert der den Datentransfer überwachende und nur im Bedarfsfall eingreifende Buscontroller dem sendebereiten Busknoten mittels Aussendung einer Kontrollinformation, daß die Nachrichtenübertragung mit Fehlern behaftet war und kennzeichnet das übertragene Nachrichtenfragment als ungültig. Abhängig vom im Buscontroller implementierten Protokoll, d.h. der Zugriffsvereinbarungsregeln ist dem sendebereiten Busknoten erneut gestattet, die zu übertragene Nachricht auf das Bussystem zu legen, wobei die Anzahl der Wiederholungsvorgänge, das Bussystem zu belegen im Protokoll, d.h. der Zugriffsvereinbarung des Buscontrollers festgelegt und definiert ist. Bei erfolgreichem Empfang der vom sendebereiten Busknoten übertragenen Nachricht quittiert der die Nachricht empfangene Busknoten des bidirektionalen Datenbusses mit einem Quittierungssignal an den sendebereiten Busknoten. Bei vollständiger Übertragung der Nachricht vom sendebereiten Busknoten auf das bidirektionale Bussystem ist am Schluß der zu übertragenden Nachricht ein Prüfsummensignal auf den Bus gelegt. Anhand des Prüfsummensignales, welches der jeweiligen individuell zu übertragenden Nachricht zwischen zwei Busknoten angehängt ist, kann eine Kontrollinformation auch an den die mit Fehlern behaftete übertragene Nachricht sendenden Busknoten übermittelt werden.

Der erfindungsgemäß vorgeschlagene Buscontroller nimmt eine Zuweisung des Bussystemes nur im Bedarfsfall vor und schaltet das Bussystem in der Regel auf "frei". Bei ausbleibenden Quittierungssignal durch den jeweils die Nachricht aufnehmenden Busknoten oder bei einer Kontrollinformation "Nachricht ungültig" durch den Buscontroller stellt der jeweils die Datenübertragung vornehmende Busknoten seine Sendeaktivitäten ein, ohne daß eine Fehlerbehandlung erfolgt. Nach Aufforderung durch den dem Bussystem übergeordneten Buscontroller erfolgt eine Neusendung der zu übertragenden Nachricht auf den Bus durch Generierung eines Freizeichens, wobei die Anzahl der Wiederholvorgänge vereinbarungsgemäß im Protokoll des Buscontrollers niedergelegt ist.

Das Kontrollsignal am Buscontroller wird bei als fehlerhaft erkannter (Prüfsummenauswertung) oder bei nicht vollständig übertragener Nachricht (Überschreitung einer vorgebbaren Zeitspanne) im Buscontroller erzeugt und an den die Nachricht sendenden Busknoten übersandt. Auf diese Kontrollinformation bzw. auf dieses Kontrollsignal des Buscontrollers hin, stellt der sendende Busknoten Sendeaktivitäten ein.

Die Einstellung der Sendeaktvitäten des sendebereiten Busknotens erfolgt sowohl bei ausbleibendem Quittierungssignal durch den jeweils adressierten Busknoten, für den die zu übertragende Nachricht bestimmt war, als auch bei einer vom Buscontroller erzeugten Kontrollinformation "Nachricht ungültig" an den die Nachricht übertragenden sendebereiten Busknoten.

Die erfindungsgemäß vorgeschlagene Lösung läßt sich an einem Datenübertragungssystem mit Bussystem und CPU realisieren, wobei die in einem Bussystem eingebundenen Busknoten die Datenübertragung ohne Durchlaufen einer Fehlerroutine einstellen, wenn während der Übertragung einzelner Nachrichtenteile eine vorgegebene Zeitspanne überschritten wird und/oder ein Buscontroller an den die Nachricht sendenden Busknoten eine Kontrollinformation übermittelt hat.

Anhand einer Zeichnung wird die Erfindung nachstehend näher beschrieben.

Es zeigt:
Fig. 1 Einen schematischen Ausschnitt aus einem bidirektionalen Netzwerksystem, in welches zwei miteinander kommunizierende Busknoten eingebettet sind und
Fig. 2 eine Ausführungsvariante des Netzwerksystems gemäß Fig. 1 mit an einen Feldbus angeschlossenen, jedoch von diesem entfernter angeordneten Busknoten .

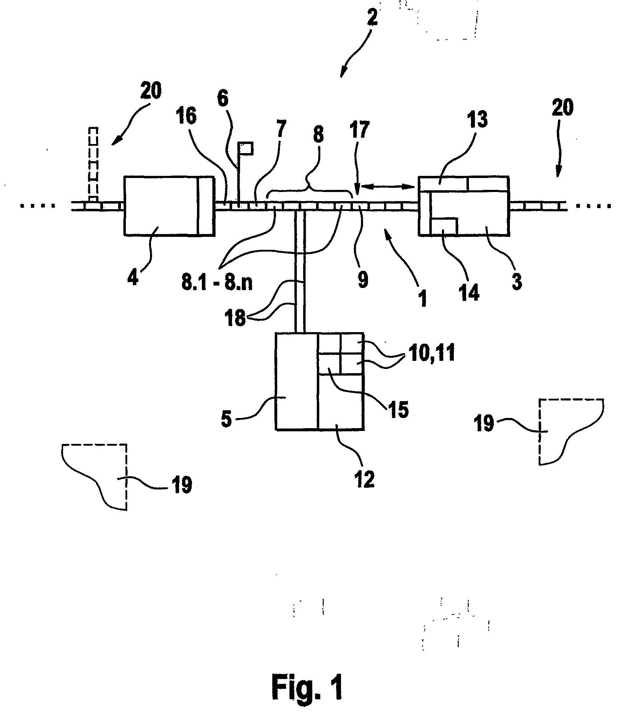

Figur 1 zeigt schematisch einen Ausschnitt aus einem bidirektionalen Netzwerksystem, in welches mehrere miteinander kommunizierende Busknoten eingebettet sind, wobei die Datenübertragung zwischen zwei miteinander kommunizierenden Busknoten über einen dem Datenbus übergeordneten Buscontroller realisiert ist.

Aus der Darstellung gemäß der Figur geht ein Netzwerk 2 hervor, aus welchem ein Ausschnitt wiedergegeben ist. Zwei Busknoten 3 bzw. 4 sind über einen Feldbus 1 miteinander verbunden. Der gemäß der Konfiguration in der Figur als Feldbus 1 beschaffene Datenbus kennt zwei Grundzustände, nämlich den Zustand "Bus frei" und den Zustand "Bus belegt". Nach dem Einschalten gilt der Buszustand "Bus belegt". Unmittelbar nach dem Einschaltzeitpunkt gibt der dem Feldbus zugeordnete Buscontroller 5 den Bus frei, d.h. der Buszustand wird auf den Zustand "Bus frei" geschaltet.

In diesem Zustand ist der Zugriff auf den Feldbus 1 für einen sendebereiten Busknoten 3 bzw. 4 gestattet.

Im in der Figur dargestellten Bussystem ist ein Buscontroller 5 vorgesehen, der eine eigene Kontrollinstanz darstellt und der ständig den Verkehr auf den Feldbus 1 überwacht und bei Bedarf, d.h. dem Vorliegen einer Zugriffskollision eingreift, um die Vergabe des Feldbusses 1 zu regeln.

Will ein sendebereiter Busknoten 3 auf den Feldbus 1 zugreifen, um eine Nachricht 8 an einen empfangenden Busknoten 4 zu übermitteln, so wird dieser Anspruch dadurch signalisiert, daß der sendebereite Busknoten seine den Buszugriff einräumenden Adresse auf den Feldbus 1 legt, d.h. er versucht sich sein eigenes ihm individuelles Freizeichen 6 zu erzeugen. Dies bedeutet für andere sendebereite Busknoten 3, die in der ausschnitthaften Konfiguration gemäß Figur 1 nicht dargestellt sind, daß der Feldbus 1 momentan durch den sendenden Busknoten 3 belegt ist. D.h. der Bus ist für weitere sendebereite Busknoten mit dem Zustand "Bus belegt" versehen. Da ein Busteilnehmer 3, 4, 19 alles, was er sendet, sofort wieder empfangen kann, wird ihm der Buszugriff nur dann gestattet, wenn sein Anspruch ungestört auf den Feldbus 1 gelangen kann. Hat jedoch ein anderer Busteilnehmer mehr oder weniger gleichzeitig ebenfalls sein eigenes individuelles Freizeichen 6 auf den Feldbus gelegt, so wurde das jeweilige Anspruchsbegehren gestört und im Ergebnis erhält in der Regel keiner der beiden sendebereiten Busknoten 3 den Zugriff auf den Feldbus 1.

Durch den Umstand, daß der dem Feldbus 1 zugeordnete Buscontroller 5 den Verkehr auf den Bus mithört, wird die Zugriffskollision durch den Buscontroller 5 erkannt, woraufhin er eingreift und den Feldbus 1 einem der beiden sendebereiten Busknoten 3 zuweist. Im Normalfall erhält ein sendebereiter Busknoten 3 sofort den Buszugriff, im Abnormalfall, d.h. dem Auftreten einer Zugriffskollision auf den Feldbus 1, muß er sich mit keinem anderen in der Zugriffsvergabe auf den Feldbus 1 streiten - dem sendebereite Busknoten ist es insbesondere nicht aufgegeben, den Aufwand zur Auflösung einer Kollision zu leisten. Statt der Auflösung einer Zugriffskollision auf einen Feldbus 1 ist dem sendebereiten Busknoten 3 entweder der Buszugriff vom Buscontroller zugewiesen oder er muß warten, bis er wieder den Zustand "Bus frei" des Feldbus 1 erkennen kann, um einen neuerlichen Versuch zu unternehmen, um seine Nachricht 8 an den diesen empfangenen Baustein, d.h. den empfangenen Busknoten 4 abzusenden.

Der dem Feldbus 1 zugeordnete Buscontroller kann die einzelnen Busteilnehmer 3, 4, 19 je nach Konfiguration auch von anderen Kommunikationsaufgaben wie beispielsweise Interruptverwaltung, Adreßvergleich, Störungsmeldung etc. entlasten. Ist einem sendebereiten Busknoten 3 nach Generierung seines individuellen Freizeichens 6 der Zugriff auf den Feldbus 1 gelungen, so darf der sendende Busknoten 3 den Feldbus 1 zur Übertragung einer Nachricht 8 nutzen. Dazu wird normalerweise eine Nachricht in Bitform an einem empfangenen Busknoten 4 übersandt, indem zunächst die Empfängeradresse 7 des empfangenden Busknotens 4 ausgegeben an welche sich Zeichen für Zeichen, d.h. Nachrichtenbit für Nachrichtenbit 8.1 bis 8.n. Nach Aufgabe der Nachricht 8 auf dem Feldbus 1 wird überprüft, ob die Nachricht vollständig auf dem Feldbus 1 angekommen ist. Ist dies nicht der Fall, so bricht der sendende Busknoten 3 seine begonnene Nachricht ab und stellt sämtliche Sendeaktivitäten ein. Dies bedeutet, daß am sendenden Busknoten 3 eine Fehlerverarbeitung durch Zeitmessfunktionen sowie Interruptverarbeitung vollständig unterbleibt. Dadurch kann am sendenden Busknoten 3 jeglicher eine aufwendige Fehlerbehandlung ermöglichender Aufwand, im Gegensatz zu anderen gängigen Busverwaltungsverfahren, eingespart werden, da dies einzig und allein durch den Buscontroller 5 geleistet wird.

Der den Datenverkehr auf den bidirektionalen Datenbus überwachende Buscontroller 5 greift immer dann ein, wenn erkannt wird, daß eine Nachricht 8 nicht zügig übermittelt wird. In diesem Falle gibt der Buscontroller 5 eine Kontrollinformation 11 aus, welche als "Nachricht ungültig" an den sendenden Busknoten 3 übermittelt wird.
Nicht zügige Übermittlung einer Nachricht 8 kann beispielsweise dadurch detektiert werden, daß an einem Bussystem mit einer fest zugeordneten Recheneinheit (CPU), die durch das Übertragen eines Protokollelementes, die zuvor übertragenen Daten als fehlerhaft kennzeichnet, wenn ein bis dahin zugriffsberechtigter sendebereiter Busknoten 3 seine Datenübertragung abbricht, in dem eine definierte Zeitspanne verstreicht, ohne daß die Datenübertragung zwischen den einzelnen Nachrichtenbits 8.1 bis 8.n.wieder aufgenommen wird. Je nachdem welche Zugriffsvereinbarungen 12 am Buscontroller 5 implementiert ist, wird dem sendebereiten Busknoten 3, der seine Nachricht nur fehlerhaft übertragen konnte, ein zweites Mal gestattet, seine Nachricht 8 erfolgreich abzuschicken. Dabei ist im Protokoll 12, in der Zugriffsvereinbarung im Buscontroller 5 niedergelegt, wie oft dem jeweils sendenden Busknoten 3 eine Wiederholung der Übertragung seiner Nachricht 8 gestattet ist.

Ist eine auf dem Feldbus 1 zu übertragende Nachricht hingegen vollständig übertragen worden, fügt der sendende Busknoten 3, die übliche CRC-Prüfsumme hinzu. Zur Bestätigung des erfolgreichen Empfanges durch den empfangenen Baustein 4 quittiert dieser den Eingang der Nachricht 8 durch entsprechende Aufforderung mit einem Quittierungssignal 14 oder mit der Kontrollinformation 16, d.h. Buszustand "frei". Andernfalls, d.h. wenn die Nachricht anhand der Auswertung des Prüfsummensignals 13 als mit Fehlern behaftet erkannt worden ist, unterläßt der empfangende Baustein 4 die Aussendung eines Quittierungssignales 14. In diesem Falle greift der dem Datentransfer auf dem Feldbus 1 überwachende Buscontroller 5 wieder ein und generiert ein Signal "Nachricht ungültig", Bezugszeichen 11, an den die Nachricht 8 sendenden Busknoten 3. Der sendende Busknoten 3 erkennt, daß seine Nachricht 8 nicht erfolgreich beim empfangenden Busknoten 4 eingegangen ist, so daß gegebenenfalls ein erneuter Versuch notwendig ist, die Nachricht zu übertragen. Bei Nachrichten 8 für mehrere Empfänger 4 bzw. 19 agiert der Buscontroller 5 autark, d.h. quittiert in diesem Falle mit Quittierungssignalen 14 positiv oder negativ.

Die sich aus diesem Verfahren ergebenden Vorteile liegen darin, daß der einzelne Busteilnehmer 3, 4, 19 bei einem auftretenden Fehlerfall einfach von Sendeaktivitäten abläßt. Dadurch kann eine erhebliche Einsparung sowohl an Hardware als auch an Ressourcen erzielt werden. Es wird vor allem vermieden, daß bei auftretenden Übertragungsfehlern auf dem Feldbus 1 in jedem Busknoten separat vorzuhaltende Fehlerroutine implementiert sind, die weiterhin den Nachteil nach sich ziehen, aufwendig zu sein, da sie auf Hardwarefunktionen, d.h. Zeitmessfunktionen und Interruptfunktionen angewiesen sind. Mit dem erfindungsgemäß vorgeschlagenen Verfahren läßt sich ein übergeordneter Buscontroller 5 sehr preiswert und leicht einbauen, der den beteiligten Busknoten 3, 4, 19 erlaubt, im Fehlerfall wieder in ihren Grundzustand zurückzukehren und entweder auf das Signal "Bus frei" oder auf die Kontrollnachricht 11 "Nachricht ungültig" des Buscontrollers 5 zu warten. Ansonsten kann jegliche Fehlerbearbeitung in dem einzelnen in dem Feldbus 1 benutzenden Busknoten vermieden werden.

Die Aufgabe des erfindungsgemäß vorgeschlagenen Buscontrollers beschränkt sich darauf, durch seine Aktivitäten bei einem aufgetretenen Übertragungsfehler nur formale Aufgaben auf den Feldbus 1 auszuführen und Nachrichten nicht inhaltlich zu verwerten. Anstatt bei jedem Busknoten 3, 4, 19 alle Funktionen für den Fehlerfall vorzuhalten, ist dies in den Buscontroller 5 ausgelagert. Mit dem Buscontroller 5 lassen sich Draht, Glasfaserkabel, Coaxkabel, Radiowellen etc. über das im Einzelfalle der Feldbus 1 seine Daten überträgt, wesentlich entlasten. Das Programm, welches im einzelnen die Busteilnehmer 3, 4, 19 und sowie den gesamten Zugriff auf den Feldbus 1 mit Übertragung und Empfang von Nachrichten ausführt, reduziert sich daher auf ein vollständig determiniertes Problem (FSM). Er werden keinerlei Zeitmessfunktionen sowie Interruptbehandlung an den einzelnen Busknoten 3, 4, 19 benötigt. Die die Zeitmessfunktionen ausführenden Timer sowie die Unterbrechungsfunktionen zur Interruptbehandlung an einem Mikroprozessor stehen dort in der Regel nur in beschränkter Anzahl zur Verfügung und lassen sich durch Auslagerung der Verarbeitung von Zugriffskollisionen am Buscontroller 5 wesentlich effektiver für andere Operationen einsetzen.

Damit ist das erfindungsgemäß vorgeschlagene Verfahren wesentlich ressourcenschonender, da die Spezialteile wie extra konfigurierte spezielle Mikrocontroller sowie erweiterte Mikroprozessoren nicht erforderlich sind, sondern lediglich die üblicherweise bereits vorhandene serielle Schnittstelle ausreichend ist. Der zur Kollisionsbehandlung im erfindungsgemäß vorgeschlagenen Verfahren vorzuhaltende Programmcode reduziert sich beim vorgeschlagenen Verfahren gegenüber gängigen Kollisionsverfahren erheblich. Bei den gängigen Verfahren sind Programmcodes in der Größenordnung von 2 Kilobytes vonnöten, während bei dem erfindungsgemäß vorgeschlagenen Verfahren 400 Bytes ausreichen. Ferner ist der Stapelspeicherbedarf extrem gering, bei Intel 80 51 Archtitektur lediglich 5 Bytes. Schließlich sei noch der Umstand erwähnt, daß bei einer Unterbrechungsverarbeitung gemäß des erfindungsgemäß vorgeschlagenen Verfahrens durch die serielle Schnittstelle (Intel 80 51) lediglich 30 Clockzyklen pro Interrupt abzuarbeiten sind. Dies bedeutet, daß die CPU in ihrer eigentlichen Basisaufgabe und nur für sehr kurze Zeit durch den Buszugriff unterbrochen wird. Vergleichbare Buszugriffsverfahren benötigen bei gleicher Prozessorarchitektur (Intel 80 51) für die gleiche Funktion ca. 175 Clockzyklen was etwa das Fünffache darstellt.

Mit dem erfindungsgemäß vorgeschlagenen Verfahren lassen sich ferner ein Ab- oder Zuschalten bei laufendem Betrieb oder auch eine vorrübergehende Suspendierung der Busaktivitäten realisieren zum Beispiel, wenn die Prozessorressourcen anderweitig exklusiv, d.h. ohne Unterbrechungsabarbeitung bei Aufgaben mit hoher Priorität benötigt werden.

Nachdem ein Knoten 3, 4, 19 an den Empfängerknoten 4 seine Nachricht vollständig übermittelt hat, geht der Buszugriff auf den Feldbus 1 protokollgemäß an den empfangenden Knoten 4 über, damit dieser die Daten den Empfang der Daten korrekt quittiert. Dabei tritt bei gängigen Lösungen oft das Problem auf, daß der abgebende Knoten seinen Busübertrager nach dem letzten Zeichen sofort abschalten muß, damit der empfangene Knoten 4 seinen Übertrager schnell anschalten kann. Der Übergang von sendendem auf übernehmenden Knoten 3 bzw. 4 muß daher zeitlich genau synchronisiert stattfinden. Der sendende Busknoten 3 kann in dem Augenblick, in dem er sein letztes Datum 8.4 einer Nachricht 8 zu übertragen beginnt, nicht den Übertrager abschalten, da ja das Nachrichtenbit 8.4 ja noch vollständig übertragen werden muß. Er bleibt daher solange aktiv,bis er dieses letzte Datum 8.4 wieder vollständig empfangen hat und schaltet dann seinen Übertrager ab. Der empfangende Busknoten 4 wartet auf genau den gleichen Zeitpunkt, nämlich auf das letzte Datum 8.4 der Nachricht 8 und quittiert dann den vollständigen Empfang der Nachricht 8, falls sie korrekt empfangen wurde. Dies läßt sich ohne weiteres anhand der Bildung der Prüfsumme verifizieren. Prinzipiell fallen daher das Abschalten des Übertragers des sendenden Busknotens 3 und das Anschalten des Übertragers des die Nachricht 8 quittierenden Knotens 4 zusammen, wobei unterstellt wird, daß die Programmlaufzeiten für diese beiden Vorgänge gleich sind. Aufgrund des aufgezeigten Problems kann es daher in der Praxis zur Verzögerung des jeweiligen Empfangs des letzten Zeichens kommen, so daß aus dieser Überschneidung in der Zeit der Busübertrageranschaltung Übertragungsfehler auftreten können. Daher sind bei bisherigen Systemen für diese Ereignisse Verzögerungsroutinen vorgesehen, die jedoch die Interruptzeit, in der der Busverkehr abgearbeitet wird, verlängern. Das Ergebnis ist, daß andere Prozesse nicht mit Prozessorzeit bedient werden können, so daß Zeitmessfunktionen gebunden werden bzw. deren Vorhandensein vorausgesetzt wird.

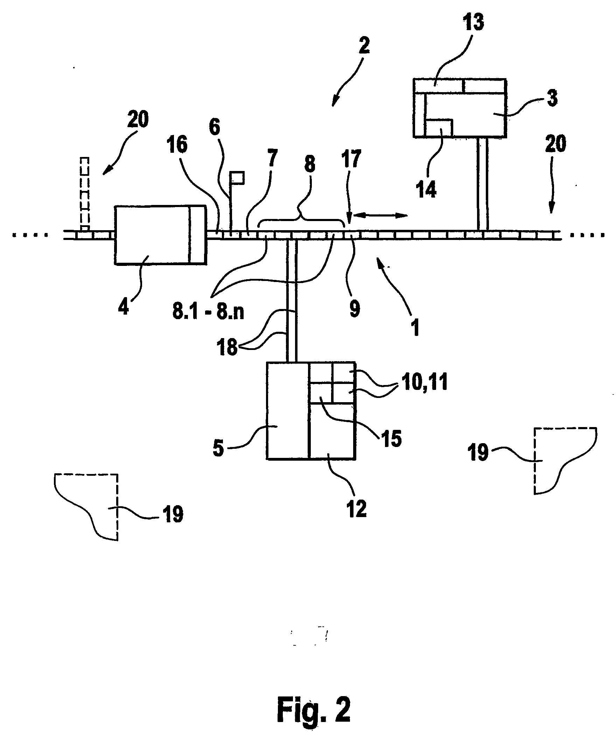

Fig. 2 zeigt eine Ausführungvariante des Netzwerksystems gemäß Fig. 1, bei dem ein Busknoten nicht in unmittelbar in den Feldbus integriert, sondern an von diesem entfernt angeordnet ist und an den Feldbus angeschlossen ist.

In der Darstellung gemäß Fig. 2 ist der Busteilnehmer 3 im Unterschied zur Darstellung gemäß Fig. 1 nicht in den Feldbus eingebettet, sondern über eine externe Leitung auf diesen aufgeschaltet. Analog zur Darstellung des Busknotens 3 gemäß der Ausführungsvariante in Fig. 1 ist im Busknoten 3 ein die Generierung eines PrüfsummenSignals 13 sowie die Generierung eines Quittierungs-Signals 14 für den Busknoten 3 bei Adressierung durch den Feldbus 1 möglich. Die Funktionsweise des bidirektionalen Netzwerkes gemäß der Darstellung in Fig. 2 entspricht der des in Fig. 1 dargestellten bidirektionalen Netzwerkes in welchem mehrere miteinander kommunizierende Busknoten eingebettet sind. Auch die Funktionsweise des dem Feldbus 1 zugeordneten Buscontrollers 5 entspricht derjenigen des Controllers 5 in der Darstellung gemäß Fig. 1.

Mit dem erfindungsgemäß vorgeschlagenen Vorsehen eines Buscontrollers 5 kann der protokollgemäße Übergang vom sendenden Busknoten 3 auf den empfangenden Busknoten 4 bewerkstelligt werden. Der zuletzt sendende Busknoten 3 überträgt seine Daten 8.1 und 8.4 vollständig. Danach geht die Kontrolle nicht direkt an den Knoten 4 über die Quittierung vorgesehenen empfangenden Busknoten 4 über. Stattdessen schaltet sich der Buscontroller 5 ein, der eine Verzögerung mit seinen zentralen Ressourcen einbauen kann ohne andere Kapazitäten zu binden. Dieses Einschalten verschafft dem zuletzt sendenden Knoten 3 die Zeit, die er benötigt, um seinen Busübertrager schnell genug abzuschalten. Danach erfolgt eine verzögerte Übergabe durch den Buscontroller 5 an den empfangenen Knoten 4, der danach seine Quittierung versenden kann oder dies gegebenenfalls auch unterläßt. Ein Busknoten, der sicherstellen kann, daß keine Probleme beim Übergang auf den empfangenden Busknoten 4 auftreten, kann direkt an den Empfänger abgeben; demgegenüber kann vorgesehen werden, daß ein kritischer Knoten das Protokollelement benutzt, welches den Übergang über den eine Verzögerung einbauenden Buscontroller 5 an den empfangenden Busknoten 4 vorsieht.

Dadurch ist das Auftreten von Übertragungsfehlern bei der Übergabe zwischen sendenden und empfangenen Busknoten 3, 4 entschärft, Interruptzeiten werden verkürzt, andere Prozesse lassen sich nunmehr in Prozessorzeit bedienen. Zeitmessfunktionen können entfallen.

### Bezugszeichenliste

- 1: Feldbus
- 2: Netzwerk
- 3: sendender Busknoten, Teilnehmer
- 4: empfangender Busknoten, Teilnehmer
- 5: Buscontroller
- 6: erzeugtes Freizeichen von 3
- 7: Empfänger-Adresse von 4
- 8: Nachricht
- 8.1: Nachrichten-Bits
- 8.2: Nachrichten-Bits
- 8.3: Nachrichten-Bits
- 8.4: Nachrichten-Bits
- 9: Nachrichtenendbit
- 10: Kontrollinformation "Nachricht gültig"
- 11: Kontrollinformation "Nachricht ungültig"
- 12: Protokollvereinbarung
- 13: Prüfsummen-Signal
- 14: Quittierungssignal Busknoten
- 15: Quittierungssignal Buscontroller
- 16: Buszustand frei
- 17: Buszustand belegt
- 18: Anschlussleitungen
- 19: weitere Busknoten, Teilnehmer
- 20: Busfortsetzung

## Patentansprüche

1. Verfahren zur Vereinbarung des Zugriffs von Knoten (3, 4, 19) auf einen Bus (1) zur Übertragung von Daten (8), wobei die die Busteilnehmer darstellenden Knoten (3, 4, 19) alle mit dem Bus (1) in Verbindung stehen und ein dem Bus (1) übergeordneter Buscontroller (5) vorgesehen ist, der zur Sicherstellung und Vergabe des Buszugriffes der Busteilnehmer (3, 4, 19) bei gleichzeitigem Zugriff durch diese dient, **dadurch gekennzeichnet, dass**
ein aus einem einzelnen bidirektionalen Feldbus gebildeter Bus (1) vorgesehen wird und ein sendebereiter Busteilnehmer (3, 4, 19) den Zugriff auf den Bus (1) durch Generierung eines individuellen Freizeichens (6) auf dem Bus (1) allen anderen Busteilnehmern (4, 19) und dem Buscontroller (5) anzeigt, wobei die Generierung des individuellen Freizeichens (6) eines sendebereiten Busteilnehmers (3) unmittelbar bei allen anderen Teilnehmern den Buszustand "belegt" erzeugt.

2. Verfahren gemäß Anspruch 1, **dadurch gekennzeichnet, dass** die Übertragung einer Nachricht (8) auf den bidirektionalen Bus(1) an einen empfangsbereiten Busteilnehmer (4) durch eine der Empfangsadresse (7) nachgeordnete Bitfolge (8.1 bis 8.n) erfolgt.

3. Verfahren gemäß Anspruch 1, **dadurch gekennzeichnet, dass** bei ausbleibendem Quittierungssignal (14) des empfangenden Busteilnehmers (4) der Buscontroller (5) eine Kontrollinformation (11) generiert.

4. Verfahren gemäß Anspruch 3, **dadurch gekennzeichnet, dass** der sendebereite Busteilnehmer (3) die Nachricht (8) erneut auf den bidirektionalen Bus legt, wobei die Anzahl der Wiederholungssendevorgänge im Protokoll (12) des Buscontrollers (5) niedergelegt ist.

5. Verfahren gemäß einem der Ansprüche 1, 2 oder 4, **dadurch gekennzeichnet, dass** der erfolgreiche Empfang der Nachricht (8) vom empfangenden Busteilnehmer (4) mit einem Quittierungssignal (14) bestätigt wird.

6. Verfahren gemäß einem der Ansprüche 1, 2, 4 oder 5, **dadurch gekennzeichnet, dass** bei vollständiger Übertragung der Nachricht (8) auf den bidirektionalen Bus (1) an diese ein Prüfsummensignal (13) angehängt wird.

7. Verfahren gemäß Anspruch 6, **dadurch gekennzeichnet, dass** bei Auswertung des Prüfsummensignals (13) anhand der Auswertung einer als falsch erkannten Nachricht (8) der Buscontroller (5) eine Kontrollinformation (11) an den die mit Fehlern behaftete Nachricht (8) sendenden Busteilnehmer (3) aussendet.

8. Verfahren gemäß **Anspruch 1, dadurch gekennzeichnet, dass** der Buscontroller (5) eine Zuweisung des bidirektionalen Bus (1) nur im Bedarfsfall vornimmt und der bidirektionale Bus (1) in der Regel freigeschaltet ist.

9. Verfahren gemäß einem der Ansprüche 1, 2, 4 oder 5, **dadurch gekennzeichnet, dass** der sendende Busteilnehmer (3) bei Ausbleiben des Quittierungssignals (14) durch den empfangenden Busteilnehmer (4) oder bei Kontrollinformation (11) "Nachricht ungültig" seine Sendeaktivität einstellt.

10. Verfahren gemäß **Anspruch 1, dadurch gekennzeichnet, dass** der Buscontroller (5) bei fehlerhaft oder unvollständig übertragener Nachricht (8) ein Kontrolisignal (11) generiert, woraufhin der sendende Busteilnehmer (3) die Sendung einstellt.

11. Verfahren gemäß einem der Ansprüche 1, 2, 4, 5 oder 9, **dadurch gekennzeichnet, dass** während des Übertragens einer Nachricht (8) diese als fehlerhaft identifiziert wird, sobald zwischen der Übertragung der einzelnen Nachrichtenbits (8.1 bis 8.n) eine definierte Zeitspanne überschritten wird, während der keine Nachrichtenübertragung stattfindet.

12. Verfahren gemäß einem der Ansprüche 1, 2, 4, 5, 9 oder 11, **dadurch gekennzeichnet, dass** bei als fehlerhaft identifizierter Nachricht (8) die Datenübertragung durch den bis dahin auf den Bus (1) zugriffsberechtigten Busteilnehmer (3) ohne Fehlerbehandlung abgebrochen wird.

13. Verfahren gemäß einem der Ansprüche 1 bis 12, **dadurch gekennzeichnet, dass** ein auf einen bidirektionalen Bus (1) zugreifender Busteilnehmer (3, 4) die Datenübertragung einstellt, wenn der Buscontroller (5) an den jeweiligen Busteilnehmer (3, 4) eine Kontrollinformation (11) übermittelt.

## Claims

1. Method for agreeing upon the access of nodes (3, 4, 19) to a bus (1) for the transmission of data (8), where all of the nodes (3, 4, 19) representing the bus subscribers are connected to the bus (1) and where a superior bus controller (5) of the bus is provided which serves for ensuring and allocating the access of the bus subscribers (3, 4, 19) to the bus, with the simultaneous access by them,
**characterised in that**
a bus (1) formed from a single bi-directional field bus is provided and that a ready-to-transmit bus subscriber (3, 4, 19) indicates the access to the bus (1) to all other bus subscribers (4, 19) and to the bus controller (5) by generating an individual line-clear signal (6) on the bus (1), the generation of the individual line-clear signal (6) of a ready-to-transmit bus subscriber (3) causing the bus state "busy" directly with all other subscribers.

2. Method according to claim 1, **characterised in that** the transmission of a message (8) onto the bi-directional bus (1) to a ready-to-receive bus subscriber (4) is effected by a bit sequence (8.1 to 8.n) secondary to the receive address (7).

3. Method according to claim 1, **characterised in that** the bus controller (5) generates a checking information (11) when there is no acknowledgement signal (14) from the receiving bus subscriber (4).

4. Method according to claim 3, **characterised in that** the ready-to-transmit bus subscriber (3) puts the message (8) once again on the bi-directional bus, with the number of repeat transmission attempts being recorded in the protocol (12) of the bus controller (5).

5. Method according to any of the claims 1, 2 or 4, **characterised in that** the successful receipt of the message (8) is confirmed with an acknowledgement signal (14) by the receiving bus subscriber (4).

6. Method according to any of the claims 1, 2, 4 or 5, **characterised in that** in the event of the complete transmission of the message (8) to the bi-directional bus (1) a checksum signal (13) is attached to the message.

7. Method according to claim 6 **characterised, in that** when the checksum signal (13) is evaluated, the bus controller (5) sends, based on the evaluation of an identified incorrect message (8), a checking information (11) to the bus subscriber (3) that is transmitting the message (8) which contains errors.

8. Method according to claim 1 **characterised, in that** the bus controller (5) allocates the bi-directional bus (1) only when necessary and that the bi-directional bus (1) is, as a general rule, released.

9. Method according to any of the claims 1, 2, 4 or 5, **characterised in that** the transmitting bus subscriber (3) discontinues its transmission activities when no acknowledgement signal (14) of the receiving bus subscriber (4) is received or upon the receipt of the checking information (11) "Message invalid".

10. Method according to claim 1, **characterised in that**, in the event of an incorrect or incomplete transmission of a message (8), a checking signal (11) is generated by the bus controller (5) whereupon the transmitting bus subscriber (3) discontinues the transmission.

11. Method according to any of the claims 1, 2, 4, 5 or 9, **characterised in that** during the transmission of a message (8) the same is identified as incorrect as soon as a defined time period during which no message is transmitted is exceeded between the transmission of the individual message bits (8.1 to 8.n).

12. Method according to any of the claims 1, 2, 4, 5, 9 or 11, **characterised in that** when a message (8) is identified as incorrect, the data transmission by the bus subscriber (3) that was entitled up to this point in time to have access to the bus (1) is aborted without error correction.

13. Method according to any of the claims 1 to 12, **characterised in that** a bus subscriber (3, 4) that accesses a bi-directional bus (1) discontinues the data transmission when the bus controller (5) transmits a checking information (11) to the respective bus subscriber (3, 4).

## Revendications

1. Procédé d'accord de l'accès de noeuds (3, 4, 19) à un bus (1) pour la transmission de données (8), les noeuds (3, 4, 19) représentant les abonnés au bus étant tous en liaison avec le bus (1), et un contrôleur de bus (5) placé à un niveau supérieur au bus (1) étant prévu, qui sert à garantir et à attribuer l'accès au bus des abonnés au bus (3, 4, 19) lors d'un accès simultané par ceux-ci,
**caractérisé en ce que**
il est prévu un bus (1) formé à partir d'un bus de terrain bidirectionnel unique, et **en ce qu'**un abonné au bus (3, 4, 19) prêt à émettre indique, à tous les autres abonnés au bus (4, 19) et au contrôleur de bus (5), l'accès au bus (1) par la production d'un signal libre (6) individuel sur le bus (1), la production du signal libre (6) individuel d'un abonné au bus (3) prêt à émettre produisant l'état de bus "occupé" immédiatement auprès de tous les autres abonnés.

2. Procédé selon la revendication 1, **caractérisé en ce que** la transmission d'un message (8) sur le bus (1) bidirectionnel adressée à un abonné au bus (4) prêt à recevoir est effectuée par une séquence binaire (8.1 à 8.n) subordonnée à l'adresse de destination (7).

3. Procédé selon la revendication 1, **caractérisé en ce que**, en l'absence de signal d'acquittement (14) de l'abonné au bus (4) récepteur, le contrôleur de bus (5) produit une information de contrôle (11).

4. Procédé selon la revendication 3, **caractérisé en ce que** l'abonné au bus (3) prêt à émettre place de nouveau le message (8) sur le bus bidirectionnel, le nombre de processus d'émissions de répétition étant consigné dans le protocole (12) du contrôleur de bus (5).

5. Procédé selon une des revendications 1, 2 ou 4, **caractérisé en ce que** la réception réussie du message (8) est confirmée par l'abonné au bus (4) récepteur par un signal d'acquittement (14).

6. Procédé selon une des revendications 1, 2, 4 ou 5, **caractérisé en ce que**, lors d'une transmission complète du message (8) sur le bus (1) bidirectionnel, un signal de sommation de contrôle (13) est accroché à ce message.

7. Procédé selon la revendication 6, **caractérisé en ce que**, lors de l'analyse du signal de sommation de contrôle (13), à l'aide de l'analyse d'un message (8) détecté comme faux, le contrôleur de bus (5) émet une information de contrôle (11) à destination de l'abonné au bus (3) émettant le message (8) affecté d'erreurs.

8. Procédé selon la revendication 1, **caractérisé en ce que** le contrôleur de bus (5) n'entreprend une assignation du bus (1) bidirectionnel qu'en cas de besoin, et **en ce que** le bus (1) bidirectionnel est généralement déconnecté.

9. Procédé selon une des revendications 1, 2, 4 ou 5, **caractérisé en ce que** l'abonné au bus (3) émetteur, en cas d'absence du signal d'acquittement (14) par l'abonné au bus (4) récepteur, ou en cas d'information de contrôle (11) "Message non valide", arrête son activité d'émission.

10. Procédé selon la revendication 1, **caractérisé en ce que** le contrôleur de bus (5), en cas de message (8) transmis de façon erronée ou incomplète, produit un signal de contrôle (11), à la suite de quoi l'abonné au bus (3) émetteur arrête l'émission.

11. Procédé selon une des revendications 1, 2 4, 5 ou 9, **caractérisé en ce que**, pendant la transmission d'un message (8), ce dernier est identifié comme erroné dès que, entre la transmission des bits individuels de message (8.1 à 8.n), une période de temps définie est dépassée pendant laquelle aucune transmission de message n'a lieu.

12. Procédé selon une des revendications 1, 2 4, 5, 9 ou 11, **caractérisé en ce que**, en cas de message (8) identifié comme erroné, la transmission de données par l'abonné au bus (3) autorisé à accéder au bus (1) jusqu'alors est interrompue sans traitement de l'erreur.

13. Procédé selon une des revendications 1 à 12, **caractérisé en ce qu'**un abonné au bus (3, 4) accédant à un bus (1) bidirectionnel arrête la transmission de données quand le contrôleur de bus (5) transmet une information de contrôle (11) à l'abonné au bus (3, 4) respectif.
